# EUROPÄISCHE PATENTSCHRIFT

(11) **EP 3 269 241 B1**
(45) Veröffentlichungstag und Bekanntmachung des Hinweises auf die Patenterteilung: **13.03.2024**
(21) Anmeldenummer: 17401073.6
(22) Anmeldetag: 05.07.2017
(51) Int. Cl.: A01M 7/00

(54) **SPRITZEINRICHTUNG UND VERFAHREN ZUM BETREIBEN EINER SPRITZEINRICHTUNG**
SPRAYING DEVICE AND METHOD FOR OPERATING THE SAME
DISPOSITIF DE PULVÉRISATION ET SON PROCÉDÉ DE FONCTIONNEMENT

(30) Priorität: 12.07.2016 DE 102016112729
(43) Veröffentlichungstag der Anmeldung: 17.01.2018
(73) Patentinhaber: Amazonen-Werke H. Dreyer SE & Co. KG, 49205 Hasbergen (DE)
(72) Erfinder: Kiefer, Stefan, 49074 Osnabrück (DE); Klemann, Timo, 49191 Belm (DE)

(56) Entgegenhaltungen:
- WO-A1-98/03733
- WO-A1-2013/083609
- GB-A- 2 361 164
- US-A1- 2014 361 094

## Beschreibung

Die Erfindung betrifft eine Spritzeinrichtung gemäß dem Oberbegriff des Anspruchs 1, und wie bekannt aus WO 98/03733 A1 oder US 2014/0361094 A1. Des Weiteren betrifft die Erfindung ein Verfahren zum Betreiben einer Spritzeinrichtung gemäß dem Oberbegriff des Anspruchs 11.

Spritzeinrichtungen, wie die hier beschriebenen, dienen dazu, Flüssigkeiten auf Flächen auszubringen. Im landwirtschaftlichen Bereich handelt es sich bei den Flächen um Felder oder Äcker. Dabei werden diese als sogenannte Feldspritze beispielsweise für Zwecke der Düngung, Schädlingsbekämpfung und ähnliches eingesetzt.

Derartige Spritzeinrichtungen weisen typischerweise wenigstens einen Vorratstank für die Flüssigkeit auf. Bei der Flüssigkeit kann es sich insbesondere um die zu verspritzende Spritzflüssigkeit handeln, die dazu in dem Tank bevorratet ist. Die Spritzflüssigkeit kann insbesondere aus einer Trägerflüssigkeit, wie insbesondere Wasser, und wenigstens einem Wirkstoff beziehungsweise Spritzmittel zusammengemischt sein. Das Vermischen kann je nach Ausführung der Spritzeinrichtung unter anderem direkt im Vorratstank, im Flüssigkeitskreislauf der Spritzeinrichtung oder unmittelbar an der Spritzdüse erfolgen. Die Spritzeinrichtung weist wenigstens eine Spritzdüse zum Versprühen der Flüssigkeit als Spritzflüssigkeit auf einer Fläche auf.

Für das Spritzergebnis, also eine möglichst positive Wirkung der Spritzflüssigkeit nach dem Ausbringen, sind neben den Wirkstoffen auch die übrigen Eigenschaften der Spritzflüssigkeit von Bedeutung. Aber auch die Mischbarkeit und/oder eventuelle Wechselwirkungen der Inhaltsstoffe der Spritzflüssigkeit sind wichtig, insbesondere der Wirkstoffe untereinander beziehungsweise mit der Trägerflüssigkeit. Insbesondere sind der pH-Wert und/oder die Wasserhärte von Interesse. Damit werden beispielsweise die Löslichkeit der Wirkstoffe in unterschiedlichem Ausmaß oder auch die Aufnahme im Boden und in den Pflanzen oder anderen Lebewesen beeinflusst. Auch beispielsweise der Gehalt an Mikroorganismen beziehungsweise die Mikroorganismenlast kann Wirkungsmechanismen verstärken oder abschwächen.

Darüber hinaus kann es je nach Zusammensetzung der Spritzflüssigkeit beziehungsweise Spritzbrühe und deren Eigenschaften einerseits zu Wechselwirkungen zwischen Trägerflüssigkeit und wenigstens einem Wirkstoff kommen, andererseits aber auch zu Wechselwirkungen zwischen Wirkstoffen untereinander. Wechselwirkungen und andere Effekte können bereits in der Spritzeinrichtung, gegebenenfalls aber auch erst im Boden, in der Pflanze und/oder oder in anderen vom Spritzvorgang betroffenen Lebewesen auftreten. Derartige Wechselwirkungen und Effekte können gewünscht oder ungewünscht sein, also einen positiven oder negativen Effekt auf das Spritzergebnis haben.

Die Wechselwirkungen hängen dabei zu einem nicht unwesentlichen Teil von der Beschaffenheit der Trägerflüssigkeit ab. Hierbei handelt es sich in der Regel um Wasser. Das als Trägerflüssigkeit verwendete Wasser wird typischerweise aus der öffentlichen Wasserversorgung oder auch aus eigenen Reservoiren, wie Teichen, Flüssen, Regenwasserbehältern oder auch Quellen entnommen. Dabei nutzt ein landwirtschaftlicher Betrieb in der Regel mehrere unterschiedliche Befüllstationen mit unterschiedlichen Wasserqualitäten und/oder Wassereigenschaften.

Nachteilig an den bekannten Spritzeinrichtungen ist, dass das Spritzergebnis teilweise erheblich einerseits von der verwendeten Trägerflüssigkeit beziehungsweise deren Herkunft und/oder andererseits vom wenigstens einen Wirkstoff abhängt. Dies resultiert insbesondere aus unterschiedlichen beziehungsweise variierenden Eigenschaften der tatsächlich verwendeten Trägerflüssigkeit, insbesondere des Wassers, und/oder der Wirkstoffe.

Die Aufgabe der Erfindung besteht darin, die beschriebenen Nachteile des Standes der Technik zu beseitigen. Insbesondere soll das Spritzergebnis verbessert werden, vor allem bei unterschiedlichen Kombinationen von Trägerflüssigkeiten und Wirkstoffen.

Eine Spritzeinrichtung mit den Merkmalen des Anspruchs 1 löst diese Aufgabe. Demnach erfolgt eine Zudosierung wenigstens eines Zusatzstoffs zur Spritzflüssigkeit. Dieser wenigstens eine Zusatzstoff weist dabei insbesondere eine positive Wirkung für das Spritzergebnis und/oder für die Wechselwirkung der Inhaltsstoffe der Spritzflüssigkeit und/oder deren Mischbarkeit auf. Dies bedeutet insbesondere, dass Wechselwirkungen zwischen den Inhaltsstoffen der Spritzflüssigkeit, also insbesondere den Wirkstoffen, unterbunden oder verbessert werden. Auch kann die Mischbarkeit der Inhaltsstoffe der Spritzflüssigkeit verbessert werden. Hierbei besitzt der Zusatzstoff selbst keine für das Spritzergebnis wirkaktive Substanz. Mit anderen Worten ist wird durch Ausbringen des Zusatzstoffes mit einer Trägerflüssigkeit allein nicht die gewünschte Spritz- oder Düngewirkung erzielt. Der Zusatzstoff ist jedoch geeignet die Wirkung eines oder mehrerer Spritzmittel je nach Kombination der Spritzmittel untereinander oder mit den speziellen Eigenschaften der verwendeten Trägerflüssigkeit zu verbessern.

Als Zudosierung können vorzugsweise mehrere Zusatzstoffe vorgesehen sein, beispielsweise um unterschiedliche Eigenschaften von Spritzflüssigkeit und/oder Trägerflüssigkeit zu beeinflussen. Es kann sich insbesondere um flüssige oder feste, gegebenenfalls aber auch gasförmige Zusatzstoffe handeln.

Vorzugsweise erfolgt die Zudosierung automatisch oder zumindest teilweise automatisch. Dies bedeutet, dass manuelle Eingriffe reduziert oder sogar zumindest größtenteils vermieden werden können. Insbesondere kann die Zudosierung vollautomatisch durchgeführt werden. Dann ist ein Benutzereingriff nicht erforderlich. Damit wird erreicht, dass einerseits menschliche Fehler vermieden werden und andererseits die Arbeiten für den Benutzer vereinfacht werden können, indem Tätigkeiten automatisch statt manuell erledigt werden.

Die Zudosierung erfolgt insbesondere abhängig von Parametern und/oder Eigenschaften der Spritzflüssigkeit und/oder der Trägerflüssigkeit und/oder vom wenigstens einen Spritzmittel oder auch Kombinationen mehrerer Spritzmittel. Es handelt sich dabei insbesondere um vordefinierte und/oder gemessene und/oder ermittelte beziehungsweise berechnete Parameter und/oder Eigenschaften. Somit kann die Zudosierung optimiert werden. Vorzugsweise kann je nach Einsatzzweck der Spritzvorrichtung beziehungsweise je nach Anforderungen des Spritzvorgangs eine geeignete Datenbasis bereitgestellt und/oder geschaffen werden, insbesondere zur zumindest teilweise automatischen Steuerung beziehungsweise Regelung der Spritzvorgänge.

Bevorzugt erfolgt die Zudosierung abhängig von der Herkunft der Spritzflüssigkeit und/oder der Trägerflüssigkeit. Besonders bevorzugt ist sie abhängig vom Befüllort des Vorratstanks. Damit lässt sich der Einfluss unterschiedlicher Eigenschaften der Trägerflüssigkeit, gegebenenfalls unterschiedlicher Qualitäten derselben berücksichtigen. Wechselwirkungen und andere Effekte lassen sich durch geeignete Zusatzstoffe minimieren. Typischerweise bietet ein Befüllort in der Regel reproduzierbare beziehungsweise konstante Eigenschaften der als Trägerflüssigkeit verwendeten Flüssigkeit. Es handelt sich bei der Flüssigkeit insbesondere um Wasser, das dann insbesondere gleichbleibenden Härtegrad und pH-Wert aufweist. Der Befüllort kann auf unterschiedliche Weise festgestellt werden, um die Zudosierung entsprechend vorzunehmen. Insbesondere kann dies durch manuelle Eingabe erfolgen. Aber auch eine Erkennung mittels geeigneter vorzugsweise automatisiert beziehungsweise elektronisch lesbarer Markierungen ist denkbar, beispielsweise mittels optischer oder elektromagnetischer Markierungen, wie insbesondere RFID-Chips. Letztere können zum Beispiel an der Befüllstation, vorzugsweise auch am Befüllschlauch oder ähnlichem angebracht sein. Auch eine Positionsbestimmung, beispielsweise durch GPS, ist möglich. Im Vorfeld ermittelte beziehungsweise gemessene Eigenschaften der Trägerflüssigkeit können dann für die Spritzeinrichtung in geeigneter Weise hinterlegt sein. Insbesondere können die Befüllorte hinterlegt sein, vorzugsweise mit den dort vorliegenden Eigenschaften der Trägerflüssigkeit.

Die Zudosierung ist beziehungsweise erfolgt insbesondere abhängig vom aktuellen und/oder früheren Inhalt des Vorratstanks. Weiter vorzugsweise wird sie abhängig von wenigstens einem vorhergegangenen Spritzvorgang und/oder von der vorher bereits verspritzten Spritzflüssigkeit und/oder Trägerflüssigkeit und/oder vom Spritzmittel vorgenommen. Damit kann die Vorgeschichte des Vorratstanks beziehungsweise der Spritzeinrichtung bei der Zudosierung berücksichtigt werden.

Dies ist wichtig, um störende Einflüsse, wie eventuelle Reste an Spritzflüssigkeit und/oder Ablagerungen, minimieren zu können. Zu diesem Zweck können geeignete Zudosierungen erfolgen.

Vorzugsweise erfolgt die Zudosierung mittels wenigstens einer Dosiereinheit. Gegebenenfalls können auch mehrere Dosiereinheiten vorgesehen sein. Als Dosiereinheit kann vorzugsweise wenigstens eine Dosierpumpe verwendet werden, insbesondere eine elektrische und/oder hydraulische Dosierpumpe. Alternativ können vorhandene Pumpeinrichtungen, vorzugsweise elektrische und/oder hydraulische Pumpeinrichtungen, genutzt werden, indem beispielsweise mittels wenigstens eines Ventils Leitungen für die Flüssigkeiten und/oder Zusatzstoffe umgeschaltet werden, um so eine Förderung des Zusatzstoffes zu erreichen. Vorzugsweise lassen sich auch unterschiedliche Kreisläufe für Trägerflüssigkeit einerseits und Zusatzstoffe andererseits vorsehen, um so eine Vermischung erst unmittelbar vor dem Ausbringen vorzunehmen zu können.

Für den wenigstens einen Zusatzstoff ist insbesondere wenigstens ein Vorratsbehälter vorgesehen. Der wenigstens eine Vorratsbehälter ist vorzugsweise austauschbar. Es kann sich beispielsweise um wiederbefüllbare Tanks, Beutel, Kanister, Kartuschen und ähnliches handeln. Damit ist eine einfache und sichere Handhabung des wenigstens einen Zusatzstoffs gewährleistet. Insbesondere kann ein Kontakt des Benutzers mit dem unverdünnten Zusatzstoff verhindert werden, um so Sicherheitsanforderungen zu entsprechen. Hierzu können die Vorratsbehälter als vorzugsweise hermetisch abgeschlossene Behälter ausgebildet sein. Die Vorratsbehälter können wenigstens ein Anschlussstück aufweisen, das erst durch ein korrespondierendes Anschlussstück der Spritzeinrichtung geöffnet wird. Der Inhalt des wenigstens einen Vorratsbehälters kann so zu Dosierzwecken in mehreren Teilen sukzessive entnommen werden. So können Fehldosierungen wie auch Entsorgungen von Restmengen vermieden werden. Eine einfache und sichere Handhabung wird ermöglicht, vorzugsweise ohne Kontakt des Benutzers mit dem unverdünnten Zusatzstoff.

Vorzugsweise ist wenigstens eine Steuerungseinrichtung zur Steuerung beziehungsweise Regelung der Zudosierung vorgesehen. Weiter vorzugsweise ist eine zumindest zeitweise und/oder teilweise Erfassung und/oder Speicherung von Parametern und/oder Eigenschaften bereits verspritzter Spritzflüssigkeit und/oder Trägerflüssigkeit durch die Steuerungseinrichtung vorgesehen. Damit können Benutzereingriffe zugunsten einer Fehlervermeidung und einer Vereinfachung der Bedienung der Spritzeinrichtung reduziert werden. Die erforderlichen Parameter und/oder Eigenschaften zur Herstellung der Spritzflüssigkeit, insbesondere zur Zudosierung, können bereits in der Steuerungseinrichtung hinterlegt sein und/oder ermittelt werden und/oder an diese übertragen werden, gegebenenfalls fallweise.

Wenigstens eine Messeinrichtung ist zur Ermittlung von Eigenschaften der Spritzflüssigkeit und/oder der Trägerflüssigkeit und vorzugsweise des wenigstens einen Spritzmittels vorgesehen. Erfindungsgemäß ist eine Ermittlung der Wasserhärte und/oder der Mikroorganismenlast vorgesehen. Damit werden die relevanten Eigenschaften der Spritzflüssigkeit und/oder Trägerflüssigkeit verarbeitet. Entsprechende Messgeräte zur Bestimmung der Wasserhärte arbeiten typischerweise auf photometrischer Basis. Gegebenenfalls kann die Messung auch elektrophoretisch, vorzugsweise mittels Kapillarelektrophorese, oder chromatographisch, vorzugsweise durch lonenchromatographie, erfolgen. Die Wasserhärte kann außerdem in üblicher Weise manuell oder auch automatisiert durch komplexometrische Titration bestimmt werden. Nicht erfindungsgemäß lassen sich derartige Messwerte auch bei den zuständigen Wasserversorgern erfragen. Messungen der Mikroorganismenlast, der Schwebstoffbelastung und ähnlicher makroskopischer Parameter können insbesondere auf optischem Wege erfolgen.

Vorzugsweise ist eine Ermittlung des pH-Werts vorgesehen. Der pH-Wert kann beispielsweise durch klassische Potentiometrie mittels eines pH-Meters oder neuerdings auch mittels ionensensitiver Feldeffekt-Transistoren gemessen werden. Es kann aber auch eine manuelle Ermittlung mittels pH-Teststreifen erfolgen.

Der wenigstens eine Zusatzstoff dient entsprechend der Zudosierung zur Beeinflussung, insbesondere Verbesserung, der Eigenschaften der Spritzflüssigkeit und/oder der Trägerflüssigkeit. Dabei wird vorzugsweise der pH-Wert und/oder die Wasserhärte und/oder die Mikroorganismenlast und/oder die Mischbarkeit beziehungsweise Wechselwirkung der Bestandteile der Spritzflüssigkeit miteinander berücksichtigt.

Die eingangs geschilderte Aufgabe wird außerdem gelöst durch ein Verfahren zum Betreiben einer Spritzeinrichtung mit den Maßnahmen des Anspruchs 11. Die Spritzeinrichtung ist dabei insbesondere entsprechend den obigen Beschreibungen ausgebildet. Vorzugsweise wird mittels der Spritzeinrichtung eine Spritzflüssigkeit auf einer Fläche verspritzt. Die Spritzflüssigkeit beinhaltet dabei wenigstens eine Trägerflüssigkeit, insbesondere Wasser, und wenigstens ein Spitzmittel. Das Verfahren zeichnet sich erfindungsgemäß gerade dadurch aus, dass zur Spritzflüssigkeit und/oder zur Trägerflüssigkeit wenigstens ein Zusatzstoff mit positiver Wirkung für das Spritzergebnis zudosiert wird. Der wenigstens eine Zusatzstoff wird zusätzlich zum wenigstens einen Wirkstoff verwendet. Er dient dazu, wenigstens eine Eigenschaft der Spritzflüssigkeit und/oder der Trägerflüssigkeit zu beeinflussen. Damit wird insbesondere erfindungsgemäß darauf abgezielt, Wechselwirkungen und/oder Effekten durch Eigenschaften der Spritzflüssigkeit und/oder der Trägerflüssigkeit und/oder des wenigstens einen Wirkstoffes entgegen zu wirken.

Das Verfahren geht bevorzugt davon aus, dass der wenigstens eine Zusatzstoff automatisch zudosiert wird. Damit können manuelle Eingriffe reduziert werden, insbesondere um Fehlbedienungen zu vermeiden und/oder den Benutzer zu entlasten. Vorzugsweise wird die Steuerung und/oder Regelung der Zudosierung durch wenigstens eine Steuerungseinrichtung durchführt. Damit erfolgt eine Verlagerung in maschinelle Verantwortung.

Erfindungsgemäß wird die Zudosierung anhand von Parametern und/oder Eigenschaften der Spritzflüssigkeit und/oder der Trägerflüssigkeit vorgenommen. Die Parameter werden gemessen und/oder ermittelt beziehungsweise berechnet. Erfindungsgemäß handelt es sich um die Wasserhärte und/oder die Mikroorganismenlast. Damit lassen sich zumindest einzelne der erfahrungsgemäß entscheidenden Parameter berücksichtigen, um das Spritzergebnis optimieren zu können.

Der wenigstens eine Zusatzstoff beeinflusst die Eigenschaften der Spritzflüssigkeit und/oder der Trägerflüssigkeit entsprechend der Zudosierung, insbesondere als Verbesserung. Es handelt sich vorzugsweise um den pH-Wert und/oder die Wasserhärte und/oder die Mikroorganismenlast und/oder die Mischbarkeit beziehungsweise Wechselwirkung der Bestandteile der Spritzflüssigkeit miteinander. Damit erfolgt eine Einflussnahme auf die Spritzflüssigkeit und/oder die Trägerflüssigkeit, um so das Spritzergebnis zu verbessern. Es wird insbesondere Einfluss auf eventuelle Wechselwirkungen und/oder Effekte zwischen Trägerflüssigkeit und/oder Wirkstoffen genommen. Bevorzugt wird der wenigstens eine Zusatzstoff aus wenigstens einem Vorratsbehälter oder Zusatzstoffbehälter zudosiert. Der wenigstens eine Vorratsbehälter kann vorzugsweise ausgetauscht werden. Es kann sich beispielsweise um wiederbefüllbare Tanks, Beutel, Kanister, Kartuschen und ähnliches handeln. Damit ist eine einfache und sichere Handhabung des wenigstens einen Zusatzstoffs gewährleistet. Insbesondere kann ein Kontakt des Benutzers mit dem unverdünnten Zusatzstoff verhindert werden, um so Sicherheitsanforderungen zu entsprechen. Hierzu können die Vorratsbehälter als vorzugsweise hermetisch abgeschlossene Behälter ausgebildet sein. Die Vorratsbehälter können wenigstens ein Anschlussstück aufweisen, das erst durch ein korrespondierendes Anschlussstück der Spritzeinrichtung geöffnet wird. Der Inhalt des wenigstens einen Vorratsbehälters kann so zu Dosierzwecken in mehreren Teilen sukzessive entnommen werden. So können Fehldosierungen wie auch Entsorgungen von Restmengen vermieden werden. Eine einfache und sichere Handhabung wird ermöglicht, vorzugsweise ohne Kontakt des Benutzers mit dem unverdünnten Zusatzstoff.

Als Zusatzstoffe zur Absenkung oder Neutralisierung des pH-Wertes eignen sich zum Beispiel Säuren oder Salze, wie insbesondere Zitronensäure, schwefelsaures Ammoniak, oder ähnliches, aber auch spezielle Additive und Wirkstoffe, die einen Einfluss auf den pH-Wert haben. Zur Erhöhung des pH-Werts können darüber hinaus unter anderem Laugen, wie beispielsweise Natriumhydroxit (NaOH), oder auch Bor-haltige Stoffe, wie insbesondere Natriumborat, verwendet werden. Der Härtegrad kann durch geeignete Stoffe angepasst werden. Hier können insbesondere primär zur Reduzierung des Kalk- beziehungsweise Magnesiumgehalts entsprechende "Gegenspieler" eingesetzt werden, wie beispielsweise schwefelsaurer Ammoniak, organische Säuren oder spezielle Additive beziehungsweise Enthärter. Bei zu hohem Eisen- und/oder Mangangehalt kann üblicherweise eine Wasseraufbereitung erfolgen.

Bevorzugte Ausführungsbeispiele der Erfindung werden im Folgenden anhand der Zeichnungen beschrieben. In diesen zeigen:
- Fig. 1: eine perspektivische Ansicht einer Feldspritze als erfindungsgemäßer Spritzeinrichtung angehängt an einem Zugfahrzeug,
- Fig. 2: einen Flüssigkeitslaufplan einer erfindungsgemäßen Spritzeinrichtung mit direkter Einspeisung als erstem Ausführungsbeispiel, und
- Fig. 3: einen Flüssigkeitslaufplan einer erfindungsgemäßen Spritzeinrichtung mit druckseitiger Einspeisung als zweitem Ausführungsbeispiel.

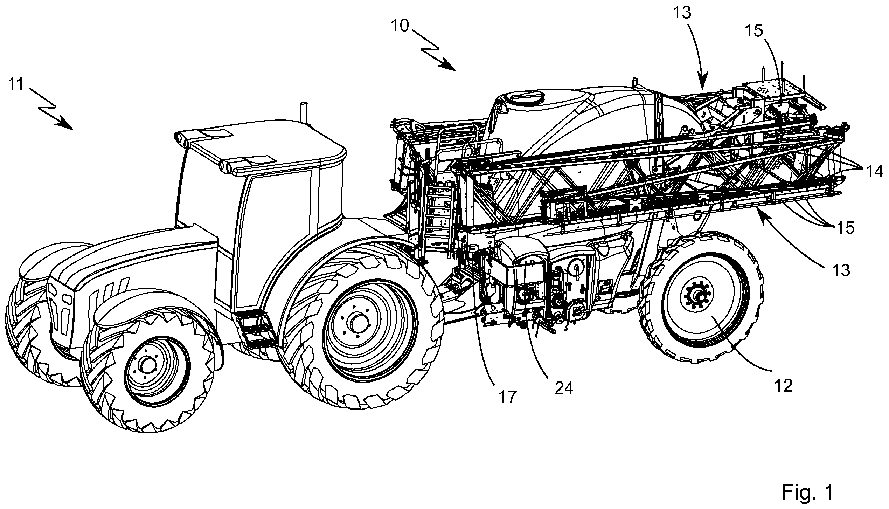

Die Figuren zeigen unterschiedliche Ausführungen einer Spritzeinrichtung 10. Bei der in Fig. 1 dargestellten Spritzeinrichtung 10 handelt es sich um eine sogenannte Feldspritze. Diese dienen im landwirtschaftlichen Bereich zum Ausbringen von Flüssigkeiten auf einer landwirtschaftlichen Fläche, wie einem Acker, einem Feld oder ähnlichem. Die Spritzeinrichtung 10 weist einen Flüssigkeitskreislauf 22 auf. Die Darstellung des Flüssigkeitskreislaufs 22 beschränkt sich hier der Übersicht halber auf die wesentlichen Bestandteile.

Die gezeigte Spritzeinrichtung 10 ist als sogenannte angehängte Feldspritze an ein Zugfahrzeug 11 angehängt. Dementsprechend weist die Spritzeinrichtung 10 zwei Räder 12 zum Abstützen und Verfahren auf einem Untergrund auf, insbesondere auf einer landwirtschaftlichen Fläche.

Die Spritzeinrichtung 10 weist in üblicher Weise einen Ausleger 13 auf, der sich zu beiden Seiten der Spritzeinrichtung 10 seitlich erstreckt. Der Ausleger 13 ist aus mehreren Segmenten 14 gebildet, die gelenkig miteinander verbunden sind. Somit ist der Ausleger 13 faltbar ausgebildet. Im gezeigten Ausführungsbeispiel der Fig. 1 ist der Ausleger 13 im Fahrbetrieb der Spritzeinrichtung 10 zusammengefaltet. Im Spritzbetrieb wird der Ausleger 13 seitlich typischerweise zu seiner maximalen Erstreckung ausgeklappt, kann aber je nach Anwendung auch teilweise eingeklappt bleiben oder werden.

Am Ausleger 13 sind in regelmäßigen Abständen verteilt Spritzdüsen 15 angeordnet. Diese dienen dazu, eine Spritzflüssigkeit 16 auf einer Fläche zu verspritzen. Hierzu ist wenigstens eine Spritzmittelpumpe 17 vorgesehen. Wenigstens ein Ventil 18 ist zum Schalten der Abgabe von Spritzflüssigkeit 16 mittels der Spritzdüsen 15 vorgesehen, indem die Zufuhr an Spritzflüssigkeit 16 damit aktiviert oder deaktiviert wird. Um ein selektives Schalten einzelner oder mehrerer Spritzdüsen 15 zu ermöglichen, sind aber typischerweise mehrere Ventile 18 vorgesehen.

Die Spritzflüssigkeit 16 ist in der Regel mit wenigstens einem Wirkstoff versetzt. Hierbei kann es sich beispielsweise um ein Düngemittel, ein Pflanzenschutzmittel oder ähnliches handeln. Auch können gleichzeitig mehrere Wirkstoffe in der Spritzflüssigkeit 16 vorgesehen sein. Mit der Spritzflüssigkeit 16 wird dann die entsprechende Fläche behandelt. Die Wirkstoffe werden üblicherweise in Form eines oder mehrerer Spritzmittel bereitgestellt. Dabei können auch mehrere Wirkstoffe zusammen in einem Spritzmittel kombiniert sein.

Um hinreichende Mengen der Spritzflüssigkeit 16 bereitstellen zu können, wird üblicherweise eine Trägerflüssigkeit, wie insbesondere Wasser, mit einem Wirkstoff oder mehreren Wirkstoffen in Form eines Spritzmittels oder mehrerer Spritzmittel versetzt.

Dies kann direkt in einem Vorratstank 21 erfolgen. Dann dient der Vorratstank 21 zunächst zur Aufnahme der Trägerflüssigkeit. Der Vorratstank 21 wird dazu an einer Befüllstation mit der Trägerflüssigkeit befüllt. Erst durch Zugabe des wenigstens einen Wirkstoffs beziehungsweise Spritzmittels wird diese dann zur eigentlichen Spritzflüssigkeit 16. Diese Art der Wirkstoffeinspeisung wird auch als druckseitige Einspeisung bezeichnet, da eine Zugabe durch Einpumpen in den Vorratstank 21 über Einsprühdüsen 23 erfolgt.

Um hinreichende Mengen des wenigstens einen Wirkstoffs beziehungsweise Spritzmittels zugeben zu können, ist in den gezeigten Ausführungsbeispielen exemplarisch ein Einspülbehälter 24 gezeigt. Gegebenenfalls können auch mehrere Wirkstoffbehälter beziehungsweise Einspülbehälter 24 vorgesehen sein. Der oder die Einspülbehälter 24 können über hier nicht gezeigte Ventile in den Flüssigkeitskreislauf 22 eingebunden sein, oder auch über separate Pumpeinrichtungen verfügen. Grundsätzlich kann die Zugabe des wenigstens einen Wirkstoffs des wenigstens einen Spritzmittels aber auch direkt in den Vorratstank 21 erfolgen, insbesondere automatisch oder auch manuell. Ein fakultativer Klarwassertank 25 dient darüber zur Versorgung der Spritzeinrichtung 10 mit Klarwasser 34 zum Einspülen, zum Verdünnen oder auch zu Reinigungszwecken. Mittels einer Ringleitung kann gegebenenfalls für eine kontinuierliche Zuleitung der Spritzflüssigkeit 16 zu den Spritzdüsen 15 gesorgt werden.

Alternativ kann auch ein Vermischen der Trägerflüssigkeit mit dem Wirkstoff oder den Wirkstoffen des wenigstens einen Spritzmittels erst nach Entnahme der Trägerflüssigkeit aus dem Vorratstank 21 im Flüssigkeitskreislauf 22 der Spritzeinrichtung 10 vorgesehen sein. Dann ist eine entsprechende hierfür geeignete Mischeinrichtung im Flüssigkeitskreislauf 22 vorzusehen. Eine solche Mischeinrichtung sorgt für eine Vermischung der Wirkstoffe mit der Trägerflüssigkeit zur Spritzflüssigkeit 16. Auch kann eine solche Vermischung in einer alternativen Ausführung gegebenenfalls erst unmittelbar im Bereich der Spritzdüsen 15 erfolgen.

Als Trägerflüssigkeit zur Aufnahme des Wirkstoffs oder der Wirkstoffe beziehungsweise des Spritzmittels ist typischerweise Wasser vorgesehen. Wasser ist abhängig von dessen Herkunft unterschiedlich gut zum Einsatz als Spritzflüssigkeit unter Zugabe von Wirkstoffen geeignet. Beispielsweise spielen Faktoren, wie der pH-Wert oder die Wasserhärte, eine große Rolle bei der Wirksamkeit einzelner Wirkstoffe des Spritzmittels. Auch das Zusammenspiel mehrerer Wirkstoffe in einem oder mehreren Spritzmitteln kann dadurch deutlich beeinflusst werden. Bei der üblichen Entnahme der Trägerflüssigkeit abwechselnd aus unterschiedlichen Quellen, wie beispielweise Teichen, Regenwassertanks oder der öffentlichen Wasserversorgung, ergeben sich immer unterschiedliche Eigenschaften der Trägerflüssigkeit.

In der Regel gibt es aber Bereiche für die einzelnen Eigenschaften der Trägerflüssigkeit, die für ein optimales Spritzergebnis beziehungsweise für optimale Wirksamkeit und/oder Wechselwirkung einzuhalten sind. Typischerweise sollte der pH-Wert optimal zwischen 5 und 7 eingestellt werden. Der optimale pH-Wert ist jedoch auch abhängig vom jeweiligen Spritzmittel beziehungsweise der jeweiligen Spritzmittelkombination.

Dementsprechend soll die erfindungsgemäße Spritzeinrichtung 10 dafür sorgen, dass Unterschiede in den Eigenschaften der Trägerflüssigkeit beziehungsweise Abweichungen vom Optimum möglichst ausgeglichen werden. Dies erfolgt durch Zudosierung von Zusatzstoffen 26. Insgesamt soll so ein verbessertes Spritzergebnis beziehungsweise eine bessere Mischbarkeit und/oder Wechselwirkung erhalten werden. Eine derartige Zudosierung kann grundsätzlich unabhängig davon erfolgen, ob die Trägerflüssigkeit im Vorratstank 21 mit den Wirkstoffen beziehungsweise Spritzmitteln zur Spritzflüssigkeit 16 vermischt wird oder erst danach im Flüssigkeitskreislauf 22.

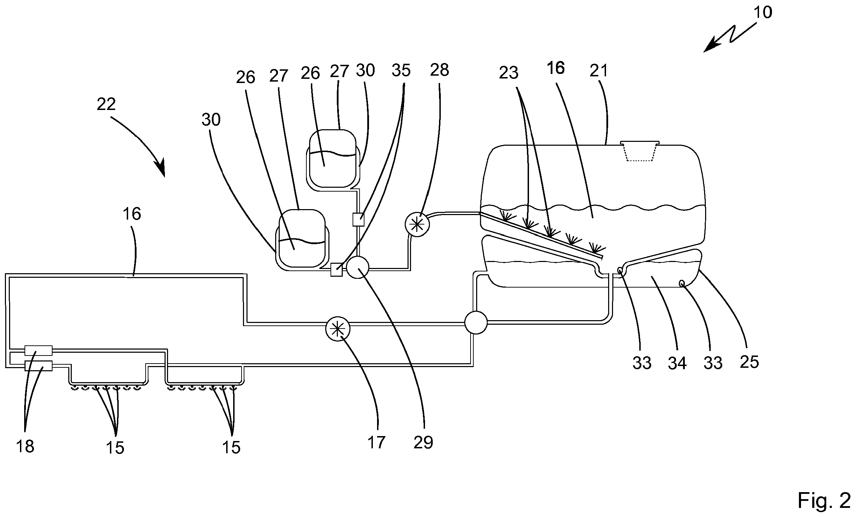

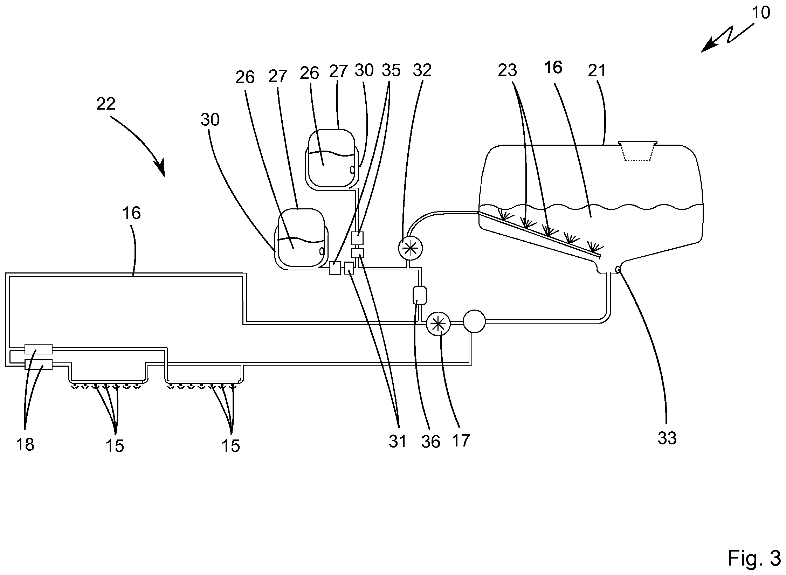

Im vorliegenden Fall wird eine Zudosierung zweier Zusatzstoffe 26 gezeigt. Die Zusatzstoffe 26 werden hier in jeweils einem separaten Zusatzstoffbehälter 27 gelagert. Aus diesem Zusatzstoffbehälter 27 als Vorratsbehälter kann die Spritzeinrichtung 10 entsprechende Mengen des jeweiligen Zusatzstoffes 26 entnehmen. Hierzu kann insbesondere eine einzige zentrale Dosierpumpe 28 vorgesehen sein, gegebenenfalls auch je eine Dosierpumpe 28 je Zusatzstoff 26. Diese Dosierpumpe 28 kann beispielsweise wie in Fig. 2 die Zusatzstoffe 26 aus den jeweiligen Behältern 27 ansaugen und in den Vorratstank 21 einspritzen. Alternativ kann die Dosierpumpe 28 beispielsweise auch wie in Fig. 3 gezeigt ausgebildet sein und als Pumpe 32 sowohl die Zusatzstoffe 26 also auch Spritzflüssigkeit 16 fördern, um ein passendes Mischungsverhältnis zum genaueren Dosieren herstellen zu können.

Die Fig. 2 zeigt exemplarisch eine direkte Einspritzung der Zusatzstoffe 26 in den Vorratstank 21. Aus Kostengründen können aber statt einer separaten Ausbildung der Komponenten bereits vorhandene Mittel genutzt werden, also insbesondere ein vorhandenes Mischventil und/oder vorhandene Einsprühdüsen 23 für Wirkstoffe.

Ein Aufbau ähnlich zu Fig. 3 kann bevorzugt verwendet werden. Gegebenenfalls kann statt der in der Fig. 3 gezeigten druckseitigen Einspeisung auch eine saugseitige Einspeisung im Abgang vom Vorratstank 21 aus vorgesehen sein.

Die Wirkstoffe 26 können auch aus einem separaten Einspülbehälter 24 in den Vorratstank 21 eingespült werden. Hierzu wird der wenigstens eine Wirkstoff 26 in den Einspülbehälter 24 gegeben. Das Einspülen erfolgt dann vorzugsweise mittels Klarwasser 34 aus einem Klarwassertank 25.

Ein Mischventil 29 dient im gezeigten Fall exemplarisch zur Vermischung der beiden Zusatzstoffe 26. Es kann jedoch auch entfallen. Auch können geeignete Ventile bei einem druck- oder saugseitigen Anschluss an den Flüssigkeitskreislauf 22 vorgesehen sein. In diesem Fall könnte der Zusatzstoff 26 auch durch den vorhandenen Druck im Kreislauf 22 entnommen werden.

Angedeutet ist dabei auch, dass es sich hier um herausnehmbare Zusatzstoffbehälter 27 handelt. Diese sind dazu in einer Behälteraufnahme 30 an der Spritzeinrichtung 10 eingesetzt. Diese Behälteraufnahme 30 dient dabei zur Halterung eines Zusatzstoffbehälters 27 und zur Regelung der Entnahme der Zusatzstoffe 26, indem Vorkehrungen für eine entsprechende Entnahme getroffen werden, beispielsweise in Form korrespondierender Anschlussstücke an Behälteraufnahme 30 und Zusatzstoffbehälter 27 oder ähnlichem.

Gegebenenfalls können die Zusatzstoffbehälter 27 auch mit elektronisch lesbaren Markierungen versehen sein, wie beispielsweise RFID, um die eingesetzten Behälter 27 identifizieren zu können. Die Zudosierung kann sowohl bei elektronischer Erkennung wie auch bei manueller Eingabe aufgrund der Zusatzstoffe 26 im Behälter 27 vorgenommen werden.

Die Zudosierung von Zusatzstoffen 26 kann aufgrund voreingestellter Parameter erfolgen. Beispielsweise kann sie abhängig von der Herkunft der Trägerflüssigkeit, also dem entsprechenden Befüllort, vorgenommen werden. Dazu ist die Position der Befüllung zu ermitteln. Dies kann beispielsweise durch manuelle Eingabe erfolgen, aber auch durch Positionsbestimmung mittels elektronischer Hilfsmittel, wie RFID (Radio Frequency Identification Device), GPS (Global Positioning System), elektronischer Kartendaten und ähnlichem.

Die Parameter und Eigenschaften der Trägerflüssigkeit lassen sich im Vorhinein in geeigneter Weise hinterlegen, insbesondere in einer hier nicht gezeigten Steuerungseinrichtung. Damit kann dann die Zudosierung der Zusatzstoffe 29 basierend auf den vordefinierten Daten vorgenommen werden. Die Steuerungseinrichtung nimmt die entsprechende Zudosierung basierend auf den vorliegenden Daten vor.

In der Ausführung der Erfindung gemäß Fig. 2 sind außerdem Messeinrichtungen 33 zur Ermittlung einzelner relevanter Parameter von Trägerflüssigkeit, Wirkstoff beziehungsweise Spritzflüssigkeit 16 vorgesehen. Die hier gezeigten Positionen im Flüssigkeitskreislauf 22 sind lediglich exemplarisch zu sehen. Die Messeinrichtungen 33 können beispielsweise zur Ermittlung des pH-Werts beziehungsweise der Wasserhärte ausgebildet sein. Somit kann eine Messung der für den Spritzvorgang wichtigen Parameter und Eigenschaften der eingesetzten Flüssigkeiten und Stoffe erfolgen.

Um eine korrekte Dosierung der Zusatzstoffe 26 sicherzustellen zu können, werden vorzugsweise Durchflussmessgeräte 35 in den entsprechenden Leitungen vorgesehen. Hier ist exemplarisch je ein Durchflussmessgerät 35 für jeden der Zusatzstoffbehälter 27 vorgesehen.

Ein Rückschlagventil 36 dient außerdem dazu, einen Rückfluss der Spritzflüssigkeit in den Bereich der Zusatzstoffdosierung zu verhindern. Außerdem kann damit eine Zudosierung allein durch den Saugdruck der Pumpe 17 ermöglicht werden. Dazu sind die Dosierventile 31 lediglich entsprechend zu öffnen.

Als Zusatzstoffe 26 können insbesondere saure und basische Stoffe, wie auch Puffer zur Regulierung beziehungsweise Einstellung des pH-Werts dienen. Entsprechende Stoffe werden insbesondere zur Regulierung der Wasserhärte eingesetzt. Zur Abtötung von Mikroorganismen lassen sich ebenfalls gegebenenfalls geeignete Mittel einsetzen.

Das erfindungsgemäße Verfahren läuft insbesondere wie folgt ab:
Eine Zudosierung eines Zusatzstoffes 26 zur Spritzflüssigkeit 16 beziehungsweise zur Trägerflüssigkeit dient dazu, das Spritzergebnis zu verbessern. Eigenschaften und Parameter sowohl der Trägerflüssigkeit als auch der Spritzflüssigkeit 16 können vom optimalen Bereich abweichen. Mittels Zusatzstoffen 26 sollen diese wieder weiter in Richtung Optimum bewegt werden.

Zur Steuerung der eigentlichen Zudosierung dient eine geeignete Steuerungseinrichtung. Aber auch die erforderlichen Datenerfassungen, Speicherungen und Berechnungen werden üblicherweise von dieser erledigt. Dabei kann auch auf externe Speicher oder Systeme zugegriffen werden, beispielsweise zur Beschaffung spezieller Berechnungsvorschriften, Wirkstoffeigenschaften oder anderer Daten.

Es erfolgt eine Zudosierung abhängig vom aktuellen Zustand der Trägerflüssigkeit beziehungsweise der Spritzflüssigkeit 16. Die relevanten Parameter und/oder Eigenschaften, wie pH-Wert und/oder Wasserhärte, können aus vorherigen Messungen bereits vorliegen und gespeichert sein oder auch gemessen werden. Dazu wird insbesondere wenigstens eine Messeinrichtung 33 eingesetzt.

Um die Eigenschaften der Trägerflüssigkeit an einem konkreten Befüllort abzurufen, kann auch eine Positionsbestimmung erfolgen, beispielsweise per GPS oder auch manuell. Die Daten der aufgefüllten Trägerflüssigkeit ergeben sich vorzugsweise dann direkt aus dem Speicher der Steuerungseinrichtung.

Nun kann durch geeignete Zugabe von Zusatzstoffen 26 zur Trägerflüssigkeit beziehungsweise Spritzflüssigkeit 16 den Abweichungen vom Optimum entgegengewirkt werden. Bei einem zu niedrigen pH-Wert kann daher insbesondere eine Base zugegeben werden, bei einem zu hohen eine Säure. So kann das Spritzergebnis positiv beeinflusst werden.

Die hier beschriebenen Ausführungsbeispiele und Varianten der Erfindung und deren Teilaspekte sind grundsätzlich miteinander kombinierbar. Somit lassen sich einzelne Merkmale unterschiedlicher gezeigter beziehungsweise beschriebener Ausführungen beziehungsweise Varianten miteinander in Verbindung bringen.

### Bezugszeichenliste

- 10: Spritzeinrichtung
- 11: Zugfahrzeug
- 12: Rad
- 13: Ausleger
- 14: Segment
- 15: Spritzdüsen
- 16: Spritzflüssigkeit
- 17: Spritzmittelpumpe
- 18: Ventil
- 21: Vorratstank
- 22: Flüssigkeitskreislauf
- 23: Einsprühdüse
- 24: Einspülbehälter
- 25: Klarwassertank
- 26: Zusatzstoff
- 27: Zusatzstoffbehälter
- 28: Dosierpumpe
- 29: Mischventil
- 30: Behälteraufnahme
- 31: Dosierventil
- 32: Pumpe
- 33: Messeinrichtung
- 34: Klarwasser
- 35: Durchflussmessgerät
- 36: Rückschlagventil

## Patentansprüche

1. Spritzeinrichtung zum Versprühen einer Spritzflüssigkeit, insbesondere für landwirtschaftliche Zwecke, mit wenigstens einem Vorratstank (21) für eine Flüssigkeit und mit wenigstens einer Spritzdüse (15) zum Versprühen der Spritzflüssigkeit (16) auf einer Fläche, wobei die Spritzflüssigkeit (16) wenigstens eine Trägerflüssigkeit, insbesondere Wasser, und wenigstens ein Spritzmittel beinhaltet, umfassend wenigstens eine Messeinrichtung (33) zur Ermittlung von Eigenschaften der Spritzflüssigkeit (16) und/oder der Trägerflüssigkeit, **dadurch gekennzeichnet, dass** mittels der Messeinrichtung (33) eine Ermittlung der Wasserhärte und/oder der Mikroorganismenlast der Spritzflüssigkeit (16) und/oder der Trägerflüssigkeit vorgesehen ist und die Spritzeinrichtung eingerichtet ist zur Zudosierung wenigstens eines Zusatzstoffs (26) mit positiver Wirkung für das Spritzergebnis und/oder für die Wechselwirkung der Inhaltsstoffe der Spritzflüssigkeit (16) und/oder deren Mischbarkeit zur Spritzflüssigkeit (16) auf der Basis der von der Messeinrichtung (33) ermittelten Eigenschaften.

2. Spritzeinrichtung nach Anspruch 1, **dadurch gekennzeichnet, dass** die Zudosierung automatisch erfolgt.

3. Spritzeinrichtung nach Anspruch 1 oder 2, **dadurch gekennzeichnet, dass** die Zudosierung abhängig von Parametern und/oder Eigenschaften der Spritzflüssigkeit (16) und/oder der Trägerflüssigkeit und/oder des wenigstens einen Spritzmittels beziehungsweise Wirkstoffs erfolgt, wobei es sich insbesondere um vordefinierte und/oder gemessene und/oder ermittelte beziehungsweise berechnete Parameter und/oder Eigenschaften handelt.

4. Spritzeinrichtung nach einem der vorhergehenden Ansprüche, **dadurch gekennzeichnet, dass** die Zudosierung abhängig von der Herkunft der Spritzflüssigkeit (16) und/oder der Trägerflüssigkeit erfolgt, vorzugsweise abhängig vom Befüllort des Vorratstanks (21).

5. Spritzeinrichtung nach einem der vorhergehenden Ansprüche, **dadurch gekennzeichnet, dass** die Zudosierung abhängig vom aktuellen und/oder früheren Inhalt des Vorratstanks (21) erfolgt, vorzugsweise abhängig von wenigstens einem vorhergegangenen Spritzvorgang und/oder von der vorher bereits verspritzten Spritzflüssigkeit (16) und/oder Trägerflüssigkeit und/oder vom Spritzmittel.

6. Spritzeinrichtung nach einem der vorhergehenden Ansprüche, **dadurch gekennzeichnet, dass** die Zudosierung mittels wenigstens einer Dosiereinheit erfolgt, vorzugsweise wenigstens einer Dosierpumpe (28, 32).

7. Spritzeinrichtung nach einem der vorhergehenden Ansprüche, **dadurch gekennzeichnet, dass** für den wenigstens einen Zusatzstoff (1̂9̂) wenigstens ein Zusatzstoffbehälter (27) als Vorratsbehälter vorgesehen ist, wobei der wenigstens eine Vorratsbehälter vorzugsweise austauschbar ist.

8. Spritzeinrichtung nach einem der vorhergehenden Ansprüche, **dadurch gekennzeichnet, dass** eine Steuerungseinrichtung zur Steuerung beziehungsweise Regelung der Zudosierung vorgesehen ist, wobei vorzugsweise eine zumindest zeitweise und/oder teilweise Erfassung und/oder Speicherung von Parametern und/oder Eigenschaften bereits verspritzter Spritzflüssigkeit (16) und/oder Trägerflüssigkeit durch die Steuerungseinrichtung vorgesehen ist.

9. Spritzeinrichtung nach einem der vorhergehenden Ansprüche, **dadurch gekennzeichnet, dass** eine Ermittlung des pH-Werts vorgesehen ist.

10. Spritzeinrichtung nach einem der vorhergehenden Ansprüche, **dadurch gekennzeichnet, dass** der wenigstens eine Zusatzstoff (26) entsprechend der Zudosierung zur Beeinflussung, insbesondere Verbesserung, der Eigenschaften der Spritzflüssigkeit (16) und/oder der Trägerflüssigkeit dient, vorzugsweise des pH-Werts und/oder der Wasserhärte und/oder der Mikroorganismenlast und/oder der Mischbarkeit beziehungsweise Wechselwirkung der Bestandteile der Spritzflüssigkeit (16).

11. Verfahren zum Betreiben einer Spritzeinrichtung, insbesondere nach einem der vorhergehenden Ansprüche, wobei eine Spritzflüssigkeit (16) mittels der Spritzeinrichtung (10) auf einer Fläche verspritzt wird, wobei die Spritzflüssigkeit (16) wenigstens eine Trägerflüssigkeit, insbesondere Wasser, und wenigstens ein Spritzmittel beinhaltet, die Spritzeinrichtung umfassend wenigstens eine Messeinrichtung (33) zur Ermittlung von Eigenschaften der Spritzflüssigkeit (16) und/oder der Trägerflüssigkeit, **dadurch gekennzeichnet, dass** mittels der Messeinrichtung (33) eine Ermittlung der Wasserhärte und/oder der Mikroorganismenlast der Spritzflüssigkeit (16) und/oder der Trägerflüssigkeit vorgesehen ist und die Spritzeinrichtung auf der Basis der von der Messeinrichtung (33) ermittelten Eigenschaften zur Spritzflüssigkeit (16) und/oder zur Trägerflüssigkeit wenigstens einen Zusatzstoff (26) mit positiver Wirkung für das Spritzergebnis und/oder für die Wechselwirkung der Inhaltsstoffe der Spritzflüssigkeit (16) und/oder deren Mischbarkeit zudosiert.

12. Verfahren nach Anspruch 11, **dadurch gekennzeichnet, dass** der wenigstens eine Zusatzstoff (26) automatisch zudosiert wird, wobei vorzugsweise wenigstens eine Steuerungseinrichtung die Steuerung und/oder Regelung der Zudosierung durchführt.

13. Verfahren nach Anspruch 11 oder 12, **dadurch gekennzeichnet, dass** die Zudosierung anhand eines pH-Werts der Spritzflüssigkeit (16) und/oder der Trägerflüssigkeit vorgenommen wird.

14. Verfahren nach einem der Ansprüche 11 bis 13, **dadurch gekennzeichnet, dass** der wenigstens eine Zusatzstoff (26) die Eigenschaften der Spritzflüssigkeit (16) und/oder der Trägerflüssigkeit entsprechend der Zudosierung beeinflusst, insbesondere verbessert, vorzugsweise den pH-Wert und/oder die Wasserhärte und/oder die Mikroorganismenlast und/oder die Mischbarkeit beziehungsweise Wechselwirkung der Bestandteile der Spritzflüssigkeit (16) miteinander.

15. Verfahren nach einem der Ansprüche 11 bis 14, **dadurch gekennzeichnet, dass** der wenigstens eine Zusatzstoff (26) aus wenigstens einem Zusatzstoffbehälter (27) als Vorratsbehälter zudosiert wird, wobei vorzugsweise der wenigstens eine Vorratsbehälter ausgetauscht werden kann.

## Claims

1. A spraying apparatus for spraying a spray liquid, in particular for agricultural purposes, with at least one storage tank (21) for a liquid and with at least one spray nozzle (15) for spraying the spray liquid (16) on a surface, wherein the spray liquid (16) contains at least one carrier liquid, in particular water, and at least one spraying agent, comprising at least one measuring apparatus (33) for determining properties of the spray liquid (16) and/or the carrier liquid,
**characterized in that** a determination of the water hardness and/or the microorganism load of the spray liquid (16) and/or the carrier liquid is provided by means of the measuring apparatus (33) and the spraying apparatus is set up for metering at least one additive (26) with a positive effect on the spraying result and/or on the interaction of the ingredients of the spray liquid (16) and/or their miscibility with the spray liquid (16) on the basis of the properties determined by the measuring apparatus (33).

2. The spraying device according to claim 1, **characterized in that** the metering takes place automatically.

3. The spraying device according to claim 1 or 2, **characterized in that** the metering takes place as a function of parameters and/or properties of the spraying liquid (16) and/or the carrier liquid and/or the at least one spraying agent or active ingredient, wherein the parameters and/or properties are in particular predefined and/or measured and/or determined or calculated parameters and/or properties.

4. The spraying apparatus according to any of the preceding claims,
**characterized in that** the metering takes place depending on the origin of the spraying liquid (16) and/or the carrier liquid, preferably depending on the filling location of the storage tank (21).

5. The spraying apparatus according to any of the preceding claims,
**characterized in that** the metering takes place depending on the current and/or previous content of the storage tank (21), preferably depending on at least one previous spraying operation and/or on the previously already sprayed spraying liquid (16) and/or carrier liquid and/or on the spraying agent.

6. The spraying apparatus according to any of the preceding claims,
**characterized in that** the metering is carried out by means of at least one metering unit, preferably at least one metering pump (28, 32).

7. The spraying apparatus according to any of the preceding claims,
**characterized in that** at least one additive container (27) is provided as a storage container for the at least one additive (19), wherein the at least one storage container is preferably interchangeable.

8. The spraying apparatus according to any of the preceding claims,
**characterized in that** a control apparatus is provided for controlling or regulating the metering, wherein at least temporary and/or partial detection and/or storage of parameters and/or properties of already sprayed spray liquid (16) and/or carrier liquid by the control apparatus is preferably provided.

9. The spraying apparatus according to any of the preceding claims,
**characterized in that** a determination of the pH value is provided.

10. The spraying apparatus according to any of the preceding claims,
**characterized in that** the at least one additive (26) is used to influence, in particular improve, the properties of the spray liquid (16) and/or the carrier liquid, preferably the pH value and/or the water hardness and/or the microorganism load and/or the miscibility or interaction of the components of the spray liquid (16), in accordance with the metered addition.

11. A method for operating a spraying apparatus, in particular according to any of the preceding claims, wherein a spray liquid (16) is sprayed on a surface by means of the spraying apparatus (10), wherein the spray liquid (16) comprises at least one carrier liquid, in particular water, and at least one spraying agent, the spraying apparatus comprising at least one measuring apparatus (33) for determining properties of the spray liquid (16) and/or the carrier liquid,
**characterized in that** the measuring apparatus (33) is used to determine the water hardness and/or the microorganism load of the spray liquid (16) and/or the carrier liquid and, on the basis of the properties determined by the measuring apparatus (33), the spraying apparatus adds at least one additive (26) to the spray liquid (16) and/or the carrier liquid with a positive effect on the spraying result and/or on the interaction of the ingredients of the spray liquid (16) and/or their miscibility.

12. The method according to claim 11, **characterized in that** the at least one additive (26) is metered in automatically, preferably with at least one control apparatus carrying out the control and/or regulation of the metering.

13. The method according to claim 11 or 12, **characterized in that** the metering is carried out on the basis of a pH value of the spray liquid (16) and/or the carrier liquid.

14. The method according to any of claims 11 to 13, **characterized in that** the at least one additive (26) influences, in particular improves, the properties of the spray liquid (16) and/or the carrier liquid according to the dosage added, preferably the pH value and/or the water hardness and/or the microorganism load and/or the miscibility or interaction of the components of the spray liquid (16) with one another.

15. The method according to any of claims 11 to 14, **characterized in that** the at least one additive (26) is dosed from at least one additive container (27) as a storage container, wherein preferably the at least one storage container can be exchanged.

## Revendications

1. Dispositif de pulvérisation permettant de vaporiser un liquide de pulvérisation, en particulier à des fins agricoles, comportant au moins un réservoir de stockage (21) destiné à un liquide et comportant au moins une buse de pulvérisation (15) permettant de vaporiser le liquide de pulvérisation (16) sur une surface, dans lequel le liquide de pulvérisation (16) contient au moins un liquide porteur, en particulier de l'eau, et au moins un agent de pulvérisation, comprenant au moins un dispositif de mesure (33) permettant de déterminer des propriétés du liquide de pulvérisation (16) et/ou du liquide porteur,
**caractérisé en ce que,** au moyen du dispositif de mesure (33), une détermination de la dureté de l'eau et/ou de la charge en microorganismes du liquide de pulvérisation (16) et/ou du liquide porteur est prévue et le dispositif de pulvérisation est conçu pour l'ajout par dosage, au liquide de pulvérisation (16), d'au moins un additif (26) à effet positif pour le résultat de la pulvérisation et/ou pour l'interaction des constituants du liquide de pulvérisation (16) et/ou leur miscibilité, sur la base des propriétés déterminées par le dispositif de mesure (33).

2. Dispositif de pulvérisation selon la revendication 1, **caractérisé en ce que** l'ajout par dosage est effectué automatiquement.

3. Dispositif de pulvérisation selon la revendication 1 ou 2,
**caractérisé en ce que** l'ajout par dosage est effectué en fonction de paramètres et/ou de propriétés du liquide de pulvérisation (16) et/ou du liquide porteur et/ou de l'au moins un agent de pulvérisation ou principe actif, dans lequel il s'agit en particulier de paramètres et/ou de propriétés prédéfinis et/ou mesurés et/ou déterminés ou calculés.

4. Dispositif de pulvérisation selon l'une des revendications précédentes,
**caractérisé en ce que** l'ajout par dosage est effectué en fonction de l'origine du liquide de pulvérisation (16) et/ou du liquide porteur, de préférence en fonction du lieu de remplissage du réservoir de stockage (21).

5. Dispositif de pulvérisation selon l'une des revendications précédentes,
**caractérisé en ce que** l'ajout par dosage est effectué en fonction du contenu actuel et/ou antérieur du réservoir de stockage (21), de préférence en fonction d'au moins un processus de pulvérisation précédent et/ou du liquide de pulvérisation (16) et/ou liquide porteur déjà pulvérisés auparavant et/ou de l'agent de pulvérisation.

6. Dispositif de pulvérisation selon l'une des revendications précédentes,
**caractérisé en ce que** l'ajout par dosage est effectué au moyen d'au moins une unité de dosage, de préférence d'au moins une pompe de dosage (28, 32).

7. Dispositif de pulvérisation selon l'une des revendications précédentes,
**caractérisé en ce qu'**au moins un récipient pour additif (27) est prévu comme récipient de stockage pour l'au moins un additif (19), dans lequel l'au moins un récipient de stockage est de préférence remplaçable.

8. Dispositif de pulvérisation selon l'une des revendications précédentes,
**caractérisé en ce qu'**un dispositif de commande permettant la commande ou la régulation de l'ajout par dosage est prévu, de préférence dans lequel une saisie et/ou une mémorisation au moins temporaires et/ou partielles de paramètres et/ou de propriétés de liquide de pulvérisation (16) et/ou de liquide porteur déjà pulvérisés sont prévues par le dispositif de commande.

9. Dispositif de pulvérisation selon l'une des revendications précédentes,
**caractérisé en ce qu'**une détermination du pH est prévue.

10. Dispositif de pulvérisation selon l'une des revendications précédentes,
**caractérisé en ce que** l'au moins un additif (26) sert, en fonction de l'ajout par dosage, à influencer, en particulier à améliorer, les propriétés du liquide de pulvérisation (16) et/ou du liquide porteur, de préférence le pH et/ou la dureté de l'eau et/ou la charge en microorganismes et/ou la miscibilité ou l'interaction des composants du liquide de pulvérisation (16).

11. Procédé permettant de faire fonctionner un dispositif de pulvérisation, en particulier selon l'une des revendications précédentes, dans lequel un liquide de pulvérisation (16) est pulvérisé sur une surface au moyen du dispositif de pulvérisation (10), dans lequel le liquide de pulvérisation (16) contient au moins un liquide porteur, en particulier de l'eau, et au moins un agent de pulvérisation, le dispositif de pulvérisation comprenant au moins un dispositif de mesure (33) permettant de déterminer des propriétés du liquide de pulvérisation (16) et/ou du liquide porteur, **caractérisé en ce que,** au moyen du dispositif de mesure (33), une détermination de la dureté de l'eau et/ou de la charge en microorganismes du liquide de pulvérisation (16) et/ou du liquide porteur est prévue et le dispositif de pulvérisation, sur la base des propriétés déterminées par le dispositif de mesure (33), ajoute par dosage, au liquide de pulvérisation (16) et/ou au liquide porteur, au moins un additif (26) à effet positif pour le résultat de la pulvérisation et/ou pour l'interaction des constituants du liquide de pulvérisation (16) et/ou leur miscibilité.

12. Procédé selon la revendication 11, **caractérisé en ce que** l'au moins un additif (26) est ajouté par dosage automatiquement, de préférence dans lequel au moins un dispositif de commande réalise la commande et/ou la régulation de l'ajout par dosage.

13. Procédé selon la revendication 11 ou 12, **caractérisé en ce que** l'ajout par dosage est effectué à l'aide d'un pH du liquide de pulvérisation (16) et/ou du liquide porteur.

14. Procédé selon l'une des revendications 11 à 13, **caractérisé en ce que** l'au moins un additif (26) influence, en particulier améliore, les propriétés du liquide de pulvérisation (16) et/ou du liquide porteur en fonction de l'ajout par dosage, de préférence le pH et/ou la dureté de l'eau et/ou la charge en microorganismes et/ou la miscibilité ou l'interaction des composants du liquide de pulvérisation (16) entre eux.

15. Procédé selon l'une des revendications 11 à 14, **caractérisé en ce que** l'au moins un additif (26) est ajouté par dosage à partir d'au moins un récipient pour additif (27) en tant que récipient de stockage, de préférence dans lequel l'au moins un récipient de stockage peut être remplacé.
